# EUROPÄISCHE PATENTANMELDUNG

(11) **EP 3 886 316 A1**
(43) Veröffentlichungstag der Anmeldung: **29.09.2021**
(21) Anmeldenummer: 21165388.6
(22) Anmeldetag: 26.03.2021
(51) Int. Cl.: H02S 20/23, F24S 25/634

(54) **PROFILSCHIENE, KLEMME, UND DIESE ENTHALTENDES MONTAGESYSTEM FÜR DIE MONTAGE VON PHOTOVOLTAIKMODULEN AUF EINEM DACH**

(30) Priorität: 28.03.2020 DE 202020101680 U; 31.07.2020 DE 202020104452 U
(71) Anmelder: Premium Mounting Technologies GmbH & Co. KG, 95346 Stadtsteinach (DE)
(72) Erfinder: GRASS, Peter, 96317 Kronach (DE)
(74) Vertreter: Jannig & Repkow Patentanwälte PartG mbB

(57) **Zusammenfassung**

Es wird ein Montagesystem für die Montage von Photovoltaikmodulen auf einem Dach beschrieben, welches eine auf dem Dach anzubringende Profilschiene und eine darauf aufsteckbare, das Photovoltaikmodul nach unten auf die Profilschiene drückende Klemme umfasst. Die Profilschiene zeichnet sich unter anderem dadurch aus, dass sie einen vertikalen Verbindungssteg aufweist, auf welchen die Klemme aufsteckbar ist. Die Klemme zeichnet sich dadurch aus, dass sie durch Aufstecken auf den vertikalen Verbindungssteg bestimmungsgemäß mit der Profilschiene in Eingriff bringbar ist. Die Profilschiene zeichnet sich ferner dadurch aus, dass sie einen vertikalen Auflagesteg zur Auflage der Photovoltaikmodule aufweist.

## Beschreibung

Die vorliegende Erfindung betrifft Vorrichtungen gemäß den Oberbegriffen der Patentansprüche 1, 9, 11, 13 und 14, also eine Profilschiene, eine Klemme, und ein diese enthaltendes Montagesystem für die Montage von Photovoltaikmodulen auf einem Dach.

Photovoltaikmodule sind bekanntlich Vorrichtungen, welche das Licht der Sonne direkt in elektrische Energie umwandeln. Es handelt sich im Allgemeinen um gerahmte quaderförmige Platten, die häufig auf Dächern von Gebäuden montiert sind.

Bekannte Montagesysteme zur Montage von Photovoltaikmodulen auf Dächern umfassen unter anderem:
- direkt auf dem Dach oder einer darauf aufgelegten Schutzmatte anzuordnende Profilschienen, die meistens durch Hohlkammerprofile aus Aluminium gebildet werden, und
- Befestigungsvorrichtungen zur Befestigung der Photovoltaikmodule an den Profilschienen oder daran montierten Stützelementen (zur Erzielung einer gewünschten Neigung der Photovoltaikmodule), beispielsweise in Form von Klemmen, durch welche die Photovoltaikmodule nach unten gegen die Profilschiene gedrückt werden.

Ein wesentlicher Aspekt eines Montagesystems für Photovoltaikanlagen besteht darin, wie die einzelnen MontagesystemKomponenten miteinander zu verbinden sind. Die miteinander zu verbindenden Komponenten müssen aus nachvollziehbaren Gründen möglichst einfach, schnell und sicher in ihrer bestimmungsgemäßen Relativlage miteinander verbindbar sein. Zusätzlich sollen sie auch möglichst schnell und einfach herstellbar sein.

Vorliegend interessieren vor allem die Verbindungen zwischen den Profilschienen und den Klemmen zur Befestigung der Photovoltaikmodule an den Profilschienen. Hierfür kommen häufig Rastverbindungen zum Einsatz. Diese können beispielsweise so ausgebildet sein, dass in den Profilschienen Schlitze oder dergleichen Rastöffnungen vorgesehen werden, und an den Klemmen zugeordnete Rasthaken vorgesehen werden, wobei die Rasthaken in die Schlitze eingesteckt werden und dahinter verrasten.

Nachteilig hieran ist, dass die in den Profilschienen vorzusehenden Schlitze genau dort zu liegen kommen müssen, wo die Klemmen vorzusehen sind. Wenn die (bereits vorgefertigten) Profilschienen an der falschen Stelle abgeschnitten werden und/oder nicht so auf dem Dach angeordnet werden, dass sich die Schlitze an der richtigen Stelle befinden, ist keine ordnungsgemäße Befestigung der Photovoltaikmodule möglich.

Nachteilig ist ferner, dass keine ordnungsgemäße Rastverbindung zustande kommt, wenn die Schlitze, genauer gesagt der die Schlitze enthaltende Profilschienenabschnitt von der vorgeschrieben Form abweichen oder aus welchem Grund auch immer verformt ist. Selbst kleinste Abweichungen bzw. Verformungen können schon schädlich sein.

Außerdem sind so mit der Profilschiene verbundene Klemmen nicht oder nur mit großem Aufwand an die Höhe der Photovoltaikmodule anpassbar.

Der vorliegenden Erfindung liegt daher die Aufgabe zugrunde, eine Möglichkeit zu finden, durch welche die Montage von Photovoltaikmodulen schneller, einfacher und weniger fehleranfällig durchführbar ist.

Diese Aufgabe wird erfindungsgemäß durch die in den Patentansprüchen 1, 9 und 11 beanspruchten Profilschienen, die in Patentanspruch 13 beanspruchte Klemme, und das in Patentanspruch 14 beanspruchte Montagesystem gelöst.

Die erfindungsgemäße Profilschiene, genauer gesagt der an dieser vorgesehene Verbindungssteg kann ohne Inkaufnahme von Nachteilen, insbesondere ohne eine Schwächung der Profilschiene und ohne einen vergrößerten Aufwand bei der Herstellung beliebig lang ausgebildet sein. Der Verbindungssteg kann sich sogar über die ganze Länge der Profilschiene erstecken. Insbesondere in diesem Fall kann eine mit dem Verbindungssteg in Eingriff zu bringende Klemme an beliebigen Stellen angeordnet werden, und zwar ohne dass zuvor darauf geachtet werden muss, wo eine zu lange Profilschiene gekürzt werden darf, und wie die gekürzte Profilschiene auf dem Dach anzuordnen ist. Und es können auch beliebig viele Klemmen zur Fixierung der Photovoltaikmodule an den Profilschienen verwendet werden. Die an der Profilschiene vorgesehenen Auflagestege sorgen für eine linienförmige und damit äußerst kleine Auflagefläche, an der sich keine nennenswerte Wassermenge sammeln kann und die auch den Abfluss von sich im Photovoltaikmodul sammelndem Wasser nicht behindert. Es kann daher auf die sonst erforderlichen Vorkehrungen zur Vermeidung der bekannten Wasserproblematik verzichtet werden. Der die Profilschiene durchlaufende Schraubkanal ermöglicht eine besonders einfache Montage von weiteren Montagesystemkomponenten oder sonstigen Gegenständen an der Profilschiene.

Eine solche Profilschiene ermöglicht eine besonders schnelle, einfache und fehlerunanfällige Montage von Photovoltaikmodulen.

Die erfindungsgemäße Profilschiene lässt sich außerdem sogar besonders schnell und einfach herstellen. Da die Profilschiene überall exakt den selben Querschnitt aufweisen kann, kann sie durch ein Stranggussprofil oder ein Strangpressprofil gebildet werden, das in einem einzigen Arbeitsschritt, insbesondere ohne ein nachträgliches Ausschneiden von Schlitzen oder dergleichen, also besonders schnell und einfach herstellbar ist.

Die erfindungsgemäße Klemme kann unabhängig von der Lage und der Dicke des damit zu befestigenden Photovoltaikmoduls bis zum Anschlagen am Photovoltaikmodul auf eine zugeordnete Erhebung an der Profilschiene aufgeschoben werden und durch eine federnde Verzahnung, beispielsweise durch eine Rastverbindung in einer Vielzahl von vertikalen Positionen daran fixiert werden, so dass die bestimmungsgemäße Montage der Klemme an der Profilschiene in einem einzigen Arbeitsgang, nämlich allein durch ein wunschgemäß weites Aufdrücken der Klemme auf die Profilschiene erfolgen kann.

Das erfindungsgemäße Montagesystem umfasst die erfindungsgemäße Profilschiene und die erfindungsgemäße Klemme und vereint die jeweiligen Vorteile derselben.

Vorteilhafte Weiterbildungen der Erfindung sind den weiteren Ansprüchen, der folgenden Beschreibung, und den Figuren entnehmbar.

Die Erfindung wird nachfolgend anhand eines Ausführungsbeispiels unter Bezugnahme auf die Figuren näher erläutert. Es zeigen
- Figur 1: eine Draufsicht auf ein auf einem Dach montiertes Photovoltaikmodul-Feld,
- Figur 2: einen in der Figur 1 mit A bezeichneten Teil der dort gezeigten Anordnung in vergrößerter Darstellung,

- Figur 3: eine perspektivische Darstellung des in der Figur 1 links unten dargestellten Abschnitts der dort gezeigten Anordnung,
- Figur 4: einen in der Figur 3 mit B bezeichneten Teil der dort gezeigten Anordnung in vergrößerter Darstellung,
- Figur 5: einen in der Figur 3 mit C bezeichneten Teil der dort gezeigten Anordnung in vergrößerter Darstellung,
- Figur 6: eine erste Seitenansicht des in der Figur 4 perspektivisch dargestellten Teils der Anordnung (Figur 4 von rechts unten gesehen),
- Figur 7: eine andere Seitenansicht des in der Figur 4 perspektivisch dargestellten Teils der Anordnung (Figur 6 von links gesehen),
- Figur 8: eine Explosionsdarstellung eines in den Anordnungen gemäß den Figuren 1 bis 7 zum Einsatz kommenden Montagesystems zur Montage der Photovoltaikelemente auf dem Dach,
- Figur 9: eine Seitenansicht eines Abschlussdeckels des in der Figur 8 gezeigten Montagesystems,
- Figur 10: eine Seitenansicht einer Klemme des in der Figur 8 gezeigten Montagesystems, und
- Figur 11: eine Seitenansicht einer Profilschiene des in der Figur 8 gezeigten Montagesystems,
- Figuren 12A bis 12D: perspektivische Ansichten verschiedener Ausführungsformen der Klemme gemäß Figur 10,
- Figur 13: eine eine vergrößerte Auflagefläche aufweisende Klemme der in den Figur 10 und 12 gezeigten Art,
- Figur 14A: eine für den Einsatz am Rand des Photovoltaikmodul-Feldes optimierte Klemme gemäß einem ersten Ausführungsbeispiel,
- Figur 14B: eine für den Einsatz am Rand des Photovoltaikmodul-Feldes optimierte Klemme gemäß einem zweiten Ausführungsbeispiel,
- Figur 15: eine Seitenansicht eines weiteren Ausführungsbeispiels der Profilschiene, und
- Figur 16: mehrere übereinander gestapelte Profilschienen gemäß Figur 16.

Wie im Folgenden näher beschrieben wird, geht es vorliegend um eine besonders einfache, schnelle und fehlerunanfällige Montage von Photovoltaikmodulen auf dem Dach eines Gebäudes.

Photovoltaikmodule sind allgemein bekannte plattenförmige Gebilde, durch welche einfallendes Licht in elektrische Energie umgewandelt wird. Die vorliegend betrachteten, in den Figuren mit dem Bezugszeichen 2 bezeichneten Photovoltaikmodule weisen einen umlaufenden Rahmen 21 auf, sind also gerahmte Photovoltaikmodule. Der Rahmen 21 besteht im betrachteten Beispiel aus Aluminium, könnte aber auch aus einem anderen Material bestehen. Die Rahmenhöhe beträgt vorliegend 30 - 50 mm, könnte prinzipiell aber auch größer oder kleiner sein.

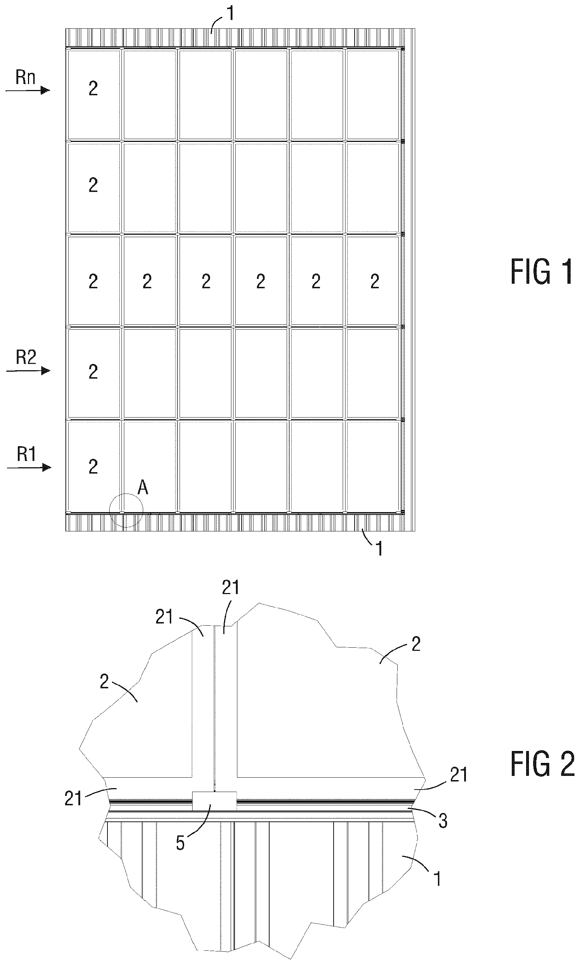

Bei der in der Figur 1 gezeigten Anordnung ist auf einem Dach 1 ein eine Vielzahl von Photovoltaikmodulen 2 umfassendes Photovoltaikmodul-Feld montiert. Das Photovoltaikmodul-Feld umfasst mehrere übereinander angeordnete Photovoltaikmodul-Reihen R1, R2 ... Rn, von welchen jede eine Vielzahl von nebeneinander angeordneten Photovoltaikmodulen 2 umfasst.

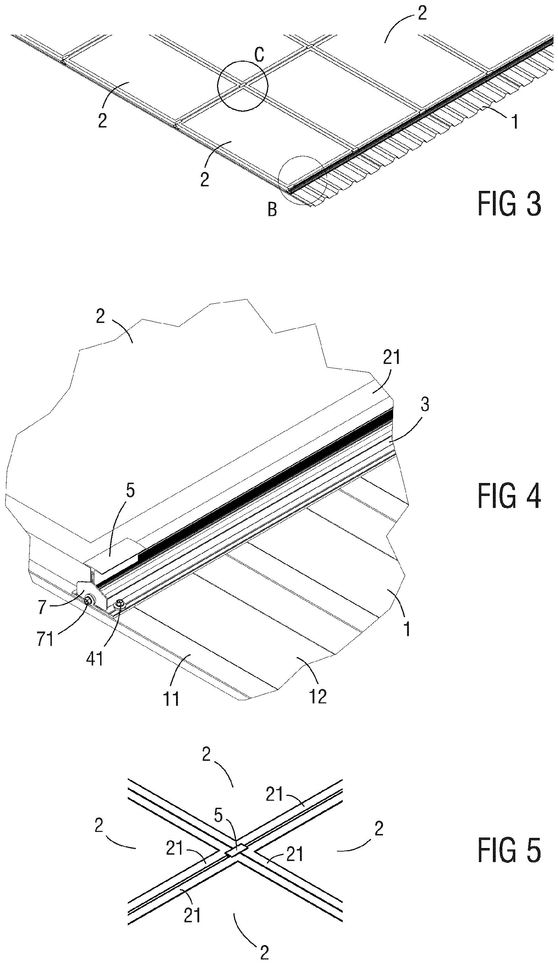

Die hier vorgestellte Photovoltaikmodul-Montage ist insbesondere für Schrägdächer geeignet, wobei es keine Einschränkung in Bezug auf die Neigung gibt. Der weiter unten liegende Teil des Daches 1 ist in der Figur 1 unten dargestellt. Von dort aus steigt das Dach 1 wie in der Figur 3 veranschaulicht mehr oder weniger steil nach oben an. Die auf dem Dach 1 montierten Photovoltaikmodule 2 sind im betrachteten Beispiel parallel zum Dach angeordnet. Dies ist der Grund, warum die hier vorgestellte Photovoltaikmodul-Montage für Flachdächer weniger geeignet ist. Prinzipiell wäre aber auch ein Einsatz bei Flachdächern möglich.

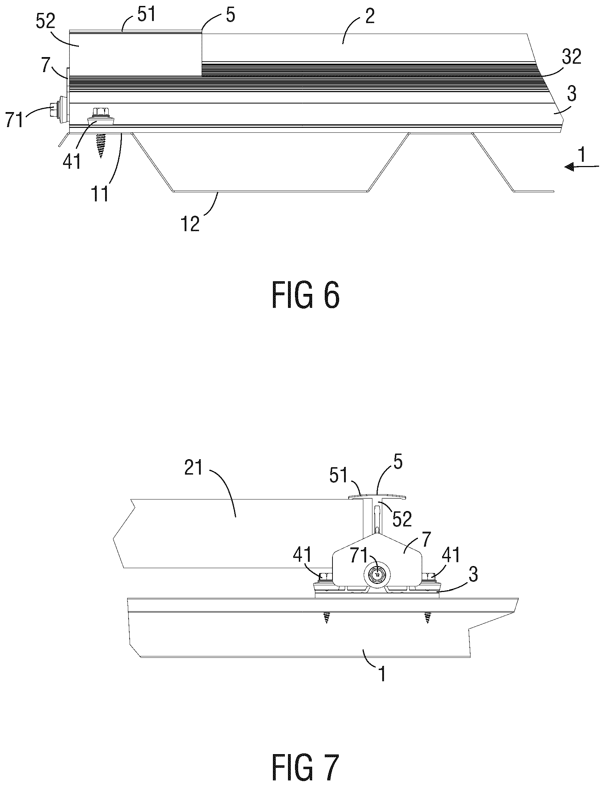

Wie beispielsweise in Figur 6 anschaulich dargestellt ist, wird das Dach 1 im betrachteten Beispiel durch ein Trapezblech gebildet. Genau genommen bildet das Trapezblech nicht das gesamte Dach, sondern nur die Dachhaut, also nur einen Teil des Daches 1. Das Trapezblech wird im Folgenden aber dennoch der Einfachheit halber als Dach bezeichnet. Auf dem Trapezblech sind unter Verwendung des hier vorgestellten Montagesystems die Photovoltaikmodule montiert. Es sei bereits an dieser Stelle darauf hingewiesen, dass das Montagesystem auch zur Montage von Photovoltaikmodulen auf anders aufgebauten Dächern geeignet ist. Es muss lediglich die Befestigung des Montagesystems am Dach an die herrschenden Verhältnisse angepasst werden.

Das Montagesystem zur Befestigung der Photovoltaikmodule 2 auf dem Dach 1, genauer gesagt später noch genauer beschriebene Profilschienen 3 desselben sind am Trapezblech befestigt. Die Befestigung erfolgt im betrachteten Beispiel durch Anschrauben der Profilschienen 3 am Trapezblech, genauer gesagt unter Verwendung von ins Trapezblech eingedrehten Schrauben 41. Die Befestigung der Profilschienen 3 am Trapezblech könnte prinzipiell aber auch auf beliebige andere Art und Weise erfolgen. Im betrachteten Beispiel erfolgt die Befestigung am Obergurt des Trapezblechs, genauer gesagt an den sogenannten Hochsicken 11 des Trapezblechs. Obgleich dies die derzeit bevorzugte Befestigung ist, könnten die Profilschienen 3 prinzipiell auch am Untergurt des Trapezblechs, genauer gesagt an den sogenannten Tiefsicken 12 des Trapezblechs befestigt werden. Zur Vermeidung von Missverständnissen sei angemerkt, dass die Hochsicken 11 und die Tiefsicken 12 des Trapezblechs abwechselnd aufeinanderfolgen und parallel zueinander verlaufen. Das Trapezblech ist so auf dem Dach angeordnet, dass die Hochsicken 11 und die Tiefsicken 12 in Richtung der Dachneigung, also von unten nach oben verlaufen, wobei mehr oder weniger große Abweichungen möglich sind. Die Profilschienen 3 verlaufen im betrachteten Beispiel rechtwinklig zu den Hochsicken 11 und Tiefsicken 12, erstrecken sich also in horizontaler Richtung, wobei auch hier mehr oder weniger große Abweichungen möglich sind.

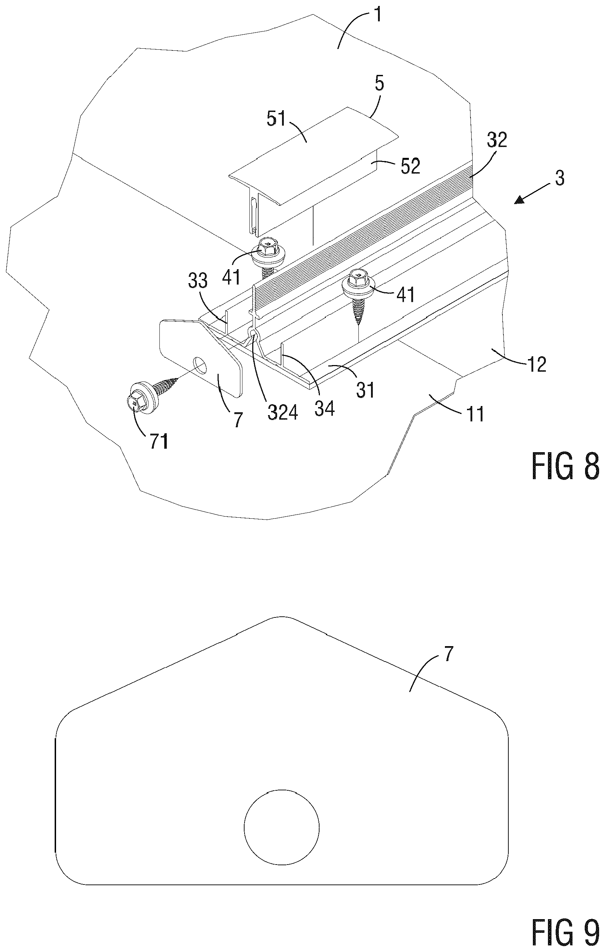

Wie besonders gut in Figur 8 erkennbar ist, umfasst das Montagesystem die bereits erwähnten Profilschienen 3, auf die Profilschienen 3 von oben her aufsteckbaren Klemmen 5, und einen Abschlussdeckel 7.

Wie später noch genauer beschrieben werden wird, weist die Klemme 5 einen etwa T-förmigen Querschnitt auf, wobei der oben liegende horizontale Schenkel 51 im bestimmungsgemäß auf eine Profilschiene 3 aufgesetzten Zustand der Klemme 5 auf dem Rahmen 21 von mindestens einem Photovoltaikmodul 2 zu liegen kommt und den Rahmen und damit das ganze Photovoltaikmodul 2 nach unten gegen die Profilschiene 3 drückt.

Je nach Lage einer jeweiligen Klemme 5 kann diese ein oder mehrere Photovoltaikmodule 2 nach unten gegen die Profilschiene 3 drücken.

Die Figur 4 zeigt eine Klemme 5, die nur ein einziges Photovoltaikmodul 2 nach unten gegen die Profilschiene 3 drückt. Genauer gesagt drückt diese Klemme 5 die linke untere Ecke des links unten im Photovoltaikmodul-Feld liegenden Photovoltaikmoduls 2 nach unten gegen die Profilschiene 3.

Die Figur 2 zeigt eine Klemme 5, die gleichzeitig zwei Photovoltaikmodule 2 nach unten gegen die Profilschiene 3 drückt. Genauer gesagt drückt diese Klemme 5 zwei aneinandergrenzende untere Ecken von zwei seitlich benachbarten Photovoltaikmodulen 2 der untersten Photovoltaikelement-Reihe R1 nach unten gegen die Profilschiene 3.

Die Figur 5 zeigt eine Klemme 5, die gleichzeitig vier Photovoltaikmodule 2 nach unten gegen die Profilschiene 3 drückt. Genauer gesagt drückt diese Klemme 5 vier aneinandergrenzende Ecken von in zwei übereinander liegenden Photovoltaikelement-Reihen liegenden Paaren von seitlich benachbarten Photovoltaikmodulen 2 nach unten gegen die Profilschiene 3.

Vorzugsweise wird jedes Photovoltaikmodul 2 an allen 4 Ecken durch eine Klemme 5 nach unten gegen die Profilschiene 3 drückt, wobei eine jeweilige Klemme 5 wie beschrieben nur ein einziges Photovoltaikmodul 2 oder bis zu vier verschiedene Photovoltaikmodule 2 gleichzeitig nach unten gegen die Profilschiene 3 drücken kann.

Wie später noch näher beschrieben wird, kann jede Klemme 5 an einer beliebigen Stelle entlang einer Profilschiene 3 auf diese aufgesteckt werden. Es besteht daher keine Einschränkung darauf, dass die Klemmen immer an den Ecken der Photovoltaikmodule 2 zu liegen kommen. Zusätzlich oder alternativ können bei Bedarf auch zwischen den Photovoltaikmodul-Ecken zu liegen kommende Klemmen 5 vorgesehen werden, die die Photovoltaikmodule 2 nach unten gegen die Profilschiene 3 drücken.

Wie insbesondere aus der Figur 8 ersichtlich ist, weist die Profilschiene 3 über ihre gesamte Länge einen konstanten Querschnitt auf. Insbesondere ist nicht vorgesehen, dass die Profilschiene 3 dort, wo die Klemmen 5 auf sie aufzustecken sind, irgendwelche Besonderheiten aufweist.

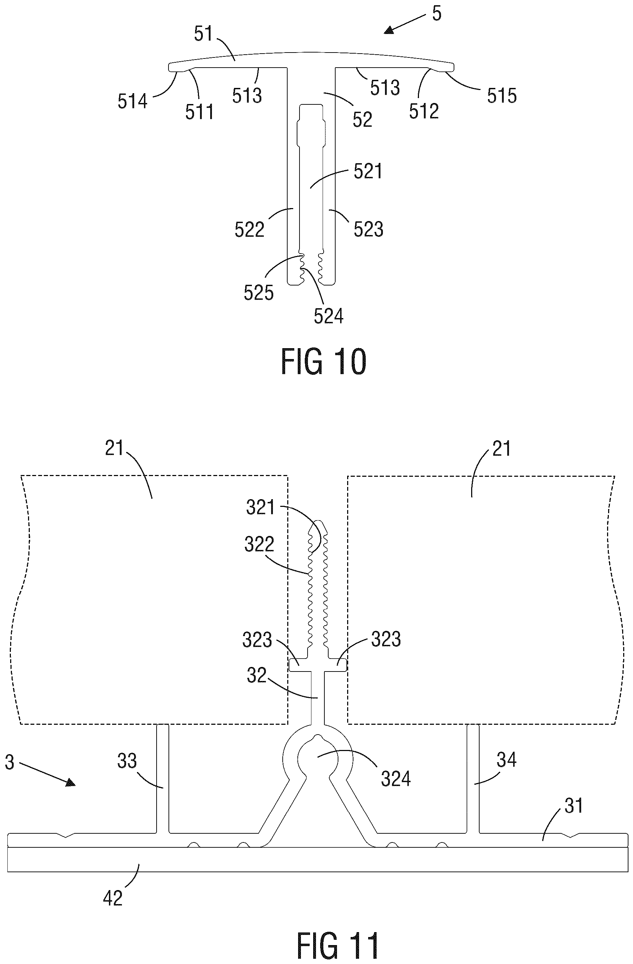

Der Querschnitt der Profilschiene 3 ist in Figur 11 veranschaulicht.

Vor der Beschreibung des Aufbaus der eigentlichen Profilschiene 3 sei angemerkt, dass die Figur 11 außer der Profilschiene 3 auch einen an der Unterseite derselben angebrachten Steifen 42 aus elastischem Material zeigt. Der Streifen ist im betrachteten Beispiel auf die Unterseite der Profilschiene 3 aufgeklebt, könnte aber auch auf beliebige andere Art und Weise daran befestigt werden. Der Streifen 42 kommt bei bestimmungsgemäßer Anbringung der Profilschiene 3 am Dach 1 zwischen dem Trapezblech und der Profilschiene 3 zu liegen und dient zum Schutz der Dachhaut vor Beschädigungen durch die Profilschienen. Dieser Streifen besteht im betrachteten Beispiel aus EPDM (Ethylen-Propylen-Dien-Monomer), könnte aber auch aus einem anderen elastischen Material bestehen.

Die Profilschiene 3 besteht im wesentlichen aus einer auf dem Dach 1 zu liegen kommenden, im wesentlichen plattenförmigen Basis 31 und mehreren von der Oberseite der Basis 31 nach oben ragenden Stegen 32 - 34. Die Stege 32 - 34 ragen von der Basis 31 rechtwinklig nach oben und verlaufen parallel zueinander. Sie verlaufen in Längsrichtung der Profilschiene 3 und erstrecken sich über die gesamte Länge der Profilschiene 3.

Wie vorstehend bereits erwähnt wurde, wird die Profilschiene 3 mittels der Schrauben 41 an den Hochsicken 11 des Trapezblechs angeschraubt. Wie insbesondere in den Figuren 6 bis 8 veranschaulicht ist, durchlaufen die Schrauben 41 die Basis 31, sodass die Profilschiene also durch ein Anschrauben der Basis 31 am Trapezblech auf dem Dach montiert wird.

Die erwähnten Stege 32 - 34 der Profilschiene 3 umfassen einen im Folgenden seiner Funktion entsprechend als Verbindungssteg 32 bezeichneten Steg. Dieser Verbindungssteg 32 der Profilschiene 3 dient zur Herstellung einer Verbindung zwischen der Profilschiene 3 und der Klemme 5. Wie insbesondere aus der Figur 11 ersichtlich ist, befindet sich der Verbindungssteg 32 bezogen auf die Breitenausdehnung der Basis 31 in der Mitte derselben und ist mittig zwischen den beiden anderen Stegen 33, 34 angeordnet. Er ragt weiter nach oben als die beiden anderen Stege 33, 34, überragt aber nicht ein bestimmungsgemäß auf der Profilschiene 3 montiertes Photovoltaikmodul 2 (siehe beispielsweise Figur 11). Der Verbindungssteg 32 weist im oberen Bereich auf seinen den Photovoltaikelementen 2 zugewandten Seitenflächen (siehe beispielsweise Figuren 4, 6 und 11), also auf seinen in Figur 11 rechts und links dargestellten Seitenflächen eine Vielzahl von mit Abstand übereinander liegenden, in Längsrichtung des Steges 32 verlaufende Nuten 321 auf. Die Nuten 321 verlaufen parallel zur Basis 31 und parallel zueinander, und erstrecken sich über die gesamte Länge des Verbindungssteges 32. Wie insbesondere aus der Figur 11 ersichtlich ist, weisen die in Rede stehenden Seitenflächen des Steges 32 dadurch im Ergebnis jeweils eine wellenförmige Oberfläche auf. Die von oben nach unten abwechselnd aufeinander folgenden Vertiefungen (Nuten 321) und Erhebungen (Bereiche zwischen benachbarten Nuten 321) bilden Rastvertiefungen 321 und Rasterhebungen 322 und ermöglichen im Zusammenwirken mit an der Klemme 5 vorgesehenen komplementären Rasterhebungen und Rastvertiefungen das Zustandekommen einer Rastverbindung zwischen dem Verbindungssteg 32 und einer darauf aufgesetzten Klemme 5. Es dürfte einleuchten und bedarf keiner näheren Erläuterung, dass die Rastvertiefungen 321 und Rasterhebungen 322 nicht die in den Figuren gezeigte (Wellen-) Form aufweisen müssen, sondern auch beliebige anderen Querschnitte aufweisen können, die zur Herstellung einer Rastverbindung oder, allgemeiner ausgedrückt, einer federnden Verzahnung geeignet sind.

Unterhalb des die Rastvertiefungen 321 und Rasterhebungen 322 enthaltenden Bereiches des (vertikalen) Verbindungssteges 32 gehen von den die Rastvertiefungen 321 und Rasterhebungen 322 enthaltenden Seitenflächen des Verbindungssteges 32 seitliche Vorsprünge 323 ab, die im betrachteten Beispiel durch rechtwinklig vom Verbindungssteg 32 abgehende Querstege 323 gebildet werden. Diese Vorsprünge bzw. Querstege dienen als ein seitlicher Anschlag für die Photovoltaikmodule 2. Genauer gesagt schlägt die dem Verbindungssteg 32 zugewandte Seitenfläche des Rahmens 21 an der Stirnseite des Quersteges 323 an. Dies ist Figur 11 veranschaulicht; der Rahmen 21 ist dort gestrichelt dargestellt. Die Querstege 323 werden daher ihrer Funktion entsprechend im Folgenden als Seitenanschlagsstege 323 bezeichnet. Die Seitenanschlagsstege 323 verlaufen parallel zur Basis 31 und parallel zu den Nuten 321 und erstrecken sich über die gesamte Länge des Verbindungssteges 32. Die Seitenanschlagsstege 323 erstrecken sich seitlich so weit weg vom Verbindungssteg 32, dass ein seitlich daran anschlagendes Photovoltaikmodul 2 einen so großen Abstand zu den Rastvertiefungen 321 und Rasterhebungen 322 hat, dass das Aufstecken der Klemme 5 auf diesen Verbindungssteg-Bereich nicht durch das Photovoltaikmodul 2 behindert wird (siehe beispielsweise Figur 7 und Figur 11).

Im unteren Bereich des Verbindungssteges 32 verzweigt sich dieser gabelförmig und weist in etwa den Querschnitt eines auf dem Kopf stehenden V auf. Kurz hinter der Verzweigung sind die beiden Schenkel zur Bildung eines einen kreisförmigen Querschnitt aufweisenden Kanals 324 nach außen gewölbt. In diesen Kanal 324 ist eine selbstfurchende Schraube eindrehbar. Genauer gesagt wird dort mittels einer Schraube 71 der Abschlussdeckel 7 an der Profilschiene 3 angeschraubt (siehe Figur 8). Selbstverständlich kann mittels der Schraube 71 bei Bedarf auch etwas anderes an die Profilschiene 3 angeschraubt werden.

Die bezogen auf die Darstellung in der Figur 11 links bzw. rechts vom Verbindungssteg 32 vorgesehenen Stege 33, 34 dienen als Auflage für die Photovoltaikmodule 2 und werden daher im Folgenden als Auflagestege 33, 34 bezeichnet. Auf diesen Auflagestegen 33, 34 kommt bei bestimmungsgemäßer Montage der Photovoltaikanlage die Unterseite des Rahmens 21 der Photovoltaikmodule 2 zu liegen. Dies ist insbesondere in der Figur 11 veranschaulicht. Die Auflagefläche für die Photovoltaikmodule wird durch die Oberseite der oberen Enden der Auflagestege 33, 34 gebildet. Die dadurch gebildete Auflagefläche ist aufgrund der geringen Dicke der Auflagestege 33, 34 linienförmig.

Der Umstand, dass die Photovoltaikmodule 2 nicht direkt auf der Basis 31 aufliegen, sondern auf den Auflagestegen 33, 34, hat den positiven Effekt, dass die Auflagefläche sehr viel kleiner ist, und keine oder jedenfalls keine nennenswerte Behinderung des Abfließens von sich im Photovoltaikmodul sammelndem Wasser darstellt. Ein schlechter Wasserabfluss könnte zu Problemen sowohl in Bezug auf die Funktion als auch in Bezug auf die Haltbarkeit der Photovoltaikmodule 2 führen. Entsprechendes gilt übrigens auch für die kleinflächige Auflage der Photovoltaikmodule an den Seitenanschlagsstegen 323.

Die bereits erwähnte Klemme 5 ist insbesondere in den Figuren 8 und 10 anschaulich dargestellt. Die Klemme 5 ist dazu ausgelegt, auf die Profilschiene 3, genauer gesagt auf den Verbindungssteg 32 derselben aufgesteckt zu werden und einhergehend damit die Photovoltaikmodule 2 nach unten zur Profilschiene, genauer gesagt auf die Auflagestege 33, 34 zu drücken. Die Photovoltaikmodule 2 kommen dabei zwischen den Profilschienen 3 und den Klemmen 5 zu liegen und werden durch diese in ihrer bestimmungsgemäßen Lage fixiert.

Wie insbesondere aus der Figur 10 ersichtlich ist, weist die Klemme 5 einen T-förmigen Querschnitt auf, umfassend den vorstehend bereits erwähnten horizontalen Schenkel 51 und einen von diesem nach unten abgehenden vertikalen Schenkel 52.

Der horizontale Schenkel 51 wird durch eine rechteckige Platte gebildet, deren Unterseite bei bestimmungsgemäß montierter Photovoltaikanlage auf den Photovoltaikmodulen 2, genauer gesagt auf dem Rahmen 21 derselben zu liegen kommt und dadurch die Photovoltaikmodule 2 in ihrer bestimmungsgemäßen Lage fixiert.

Der vertikale Schenkel 52 geht senkrecht von der Unterseite des horizontalen Schenkels 51 ab. Er befindet sich bezogen auf die Breitenausdehnung des horizontalen Schenkels 51 in der Mitte desselben und erstreckt sich über die gesamte Länge des horizontalen Schenkels 51.

Der vertikale Schenkel 52 ist in seinem vom horizontalen Schenkel 51 abgewandten Bereich gabelförmig ausgebildet. Genauer gesagt ist der vertikale Schenkel 52 durch einen sich über die gesamte Länge der Klemme 5 ersteckenden vertikalen Schlitz 521 im vertikalen Schenkel 52 in zwei identische Hälften unterteilt, die im Folgenden ihrer später noch erläuterten Funktion entsprechend als Rastschenkel 522, 523 bezeichnet werden. Der Schlitz 521 beginnt an dem vom horizontalen Schenkel 51 abgewandten Ende des vertikalen Schenkels 52, endet aber noch vor dem dem horizontalen Schenkel 51 zugewandten Ende des vertikalen Schenkels 52.

An den vom horizontalen Schenkel 51 abgewandten Enden der Rastschenkel 522, 523 sind an den einander zugewandten Seiten derselben jeweils mehrere Rastvertiefungen 524 und Rasterhebungen 525 vorgesehen, die komplementär zu den Rasterhebungen 322 und den Rastvertiefungen 321 des Verbindungssteges 32 ausgebildet sind. Der gegenseitige Abstand der Rastschenkel 522, 523 ist so bemessen, dass die Rastvertiefungen 524 und Rasterhebungen 525 des Rastschenkels 522 und die Rastvertiefungen 524 und Rasterhebungen 525 des Rastschenkels 523 genau so weit voneinander entfernt sind, dass bei bestimmungsgemäßem Zusammenbau von Profilschiene 3 und Klemme 5 die Rasterhebungen 322 des Verbindungssteges 32 in den Rastvertiefungen 524 der Rastschenkel 522, 523 zu liegen kommen, und die Rasterhebungen 525 der Rastschenkel 522, 523 in den Rastvertiefungen 321 des Verbindungssteges 32 zu liegen kommen.

Die Rastschenkel 522, 523 sind elastisch ausgebildet. Genauer gesagt sind sie elastisch auseinander drückbar und ermöglichen es damit, dass die Klemme 5 auf die Profilschiene 3 aufgesteckt wird, genauer gesagt dass der geschlitzte vertikale Schenkel 52 der Klemme 5 auf den Verbindungssteg 32 der Profilschiene 3 aufgesteckt wird. Im bestimmungsgemäß zusammengesteckten Zustand kommt der Verbindungssteg 32 zwischen den Rastschenkeln 522 und 523 zu liegen, und sind der Verbindungssteg 32 und die Rastschenkel 522 und 523 über die daran vorgesehenen Rastvertiefungen und Rasterhebungen aneinander verrastet bzw. über eine federnde Verzahnung aneinander befestigt.

Da die Verbindungsstege 32 eine Vielzahl von übereinander angeordneten Rasterhebungen 322 und den Rastvertiefungen 321 aufweisen, können der Verbindungssteg 32 und die Rastschenkel 522 und 523 nicht nur in einer Relativlage, sondern in einer Vielzahl von Relativlagen aneinander verrasten. Dadurch ist es möglich, die Klemme 5 unterschiedlich weit auf den Verbindungssteg aufzusetzen. Dies wiederum macht das Montagesystem für unterschiedlich hohe Photovoltaikelemente 2 geeignet. Die Klemme 5 wird unabhängig von der Dicke der zu montierenden Photovoltaikelemente 2 bis zum Anschlagen des horizontalen Schenkels 51 der Klemme 5 auf den Verbindungssteg 32 aufgesetzt. Vorzugsweise ist auch der horizontale Schenkel 51 der Klemme 5 in gewissem Umfang elastisch verformbar. Dies sorgt für eine bessere und gleichmäßigere Fixierung der Photovoltaikmodule 2 zwischen dem horizontalen Schenkel 51 der Klemme 5 und den Auflagestegen 33, 34.

Der vertikale Schenkel 52 der Klemme ist vorzugsweise so beschaffen, dass zum Auseinanderbewegen der Rastschenkel 522 und 523 eine nicht unerhebliche Kraft erforderlich ist. Zusätzlich sind vorzugsweise die miteinander in Eingriff kommenden Rastvertiefungen und die Rasterhebungen so geformt, dass sie ein Entfernen der Klemme 5 vom Verbindungssteg 32 erschweren, sodass im Ergebnis ein unbeabsichtigtes Lösen der Klemme 5 vom Verbindungssteg 32 verhindert wird. Insbesondere muss ausgeschlossen sein, dass sich die Klemmen 5 infolge von Sturm, Temperaturschwankungen, umherfliegenden Gegenständen, etc. selbständig lösen oder die Relativlage zum Verbindungssteg 32 verändern.

Der bereits erwähnte, insbesondere in den Figuren 8 und 9 dargestellte Abschlussdeckel 7 wird an den vorderen und hinteren Enden der Profilschiene 3 an dieser befestigt (siehe insbesondere die Figur 8). Genauer gesagt werden die Abschlussdeckel 7 jeweils mittels einer in den Schraubkanal 324 eingedrehten Schraube 71 an der Profilschiene 3 befestigt. Der Abschlussdeckel 7 ist so geformt und bemessen, dass er nicht nur die Stirnseite der Profilschiene 3 bedeckt, sondern auch einen Teil des Rahmens 21 des Photovoltaikelements 2. Die Abschlussdeckel 7 wirken somit als ein seitlicher Anschlag für die jeweils daran angrenzenden Photovoltaikelemente 2 und verhindern eine horizontale Verschiebung der Photovoltaikmodule in Längsrichtung der Profilschienen 3, sodass ein horizontaler Ausschub der Photovoltaikmodule 2 aus dem Montagesystem ausgeschlossen ist. Im bestimmungsgemäß an der Profilschiene 3 montierten Zustand des Abschlussdeckels ragt dieser nicht bis zur Dachhaut nach unten, ja nicht einmal bis zur Basis 31 der Profilschiene nach unten (siehe insbesondere Figur 7). Dadurch werden Beschädigungen der Dachhaut und Beeinträchtigungen des Wasserabflusses durch den Abschlussdeckel 7 verhindert.

Wie vorstehend bereits erwähnt wurde, werden die Profilschienen 3 horizontal auf dem Dach montiert. Da bei bestimmungsgemäßer Verwendung des Montagesystems jedes Photovoltaikmodul 2 am unteren Ende und am oberen Ende auf einer Profilschiene 3 aufliegt und durch die Klemmen 5 zur jeweiligen Profilschiene hin gedrückt wird, müssen mehrere Profilschienen mit Abstand übereinander angeordnet werden. Am unteren Ende eines Photovoltaikmodul-Feldes muss eine erste Profilschiene 3 vorgesehen sein, am oberen Ende des Photovoltaikmodul-Feldes muss eine zweite Profilschiene 3 vorgesehen sein, und zwischen je zwei Photovoltaikmodul-Reihen R1, R2 ... Rn muss jeweils eine weitere Profilschiene 3 vorgesehen sein.

Die Profilschiene 3 und die Klemme 5 sind mannigfaltig modifizierbar.

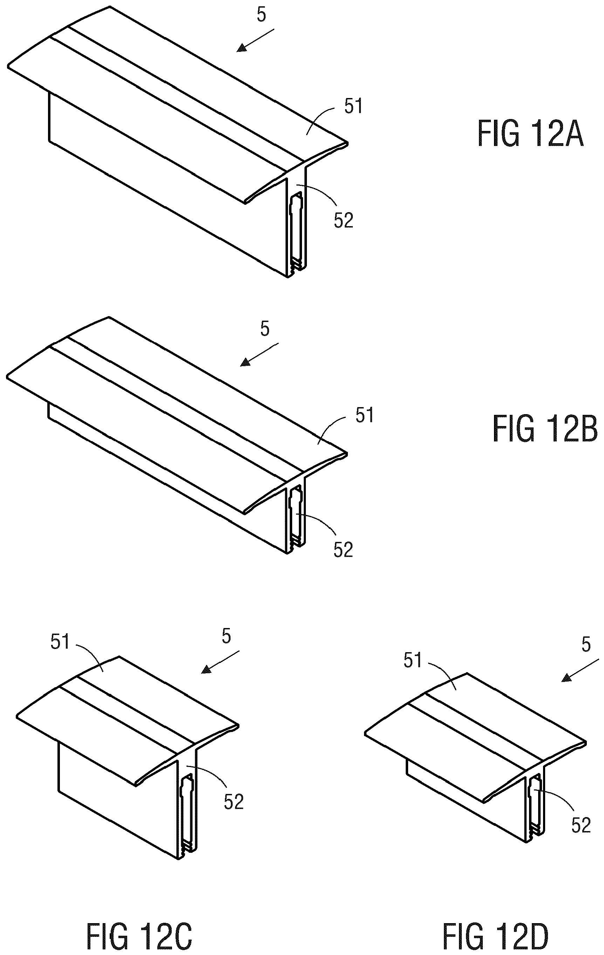

In den Figuren 12A bis 12D sind einige mögliche Abwandlungen der in den Figuren 1 bis 11 gezeigten Klemme 5 gezeigt. Die in der Figur 12A gezeigte Klemme ist eine andere (perspektivische) Ansicht der in den Figuren 1 bis 11 gezeigten Klemme 5. Die in der Figur 12B gezeigte Klemme 5 hat einen kürzeren vertikalen Schenkel 51 und ist für Photovoltaikmodule 2 mit geringer Höhe besser geeignet. Die in der Figur 12D gezeigte Klemme 5 weist zusätzlich eine geringere Länge auf und eignet sich somit insbesondere (aber nicht ausschließlich) als eine Eckklemme zur Fixierung der die Ecken eines Photovoltaikmodul-Feldes bildenden Photovoltaikmodul-Ecken, also beispielsweise als Klemme 5 der in der Figur 4 gezeigten Anordnung. Die in der Figur 12C gezeigte Klemme 5 ist die kurze Klemme gemäß Figur 12D mit längerem vertikalen Schenkel 52. Grundsätzlich ist es so, dass die Abmessungen der Klemme 5 insgesamt, aber auch die Abmessungen einzelner Klemmenabschnitte unabhängig voneinander beliebig verändert werden können.

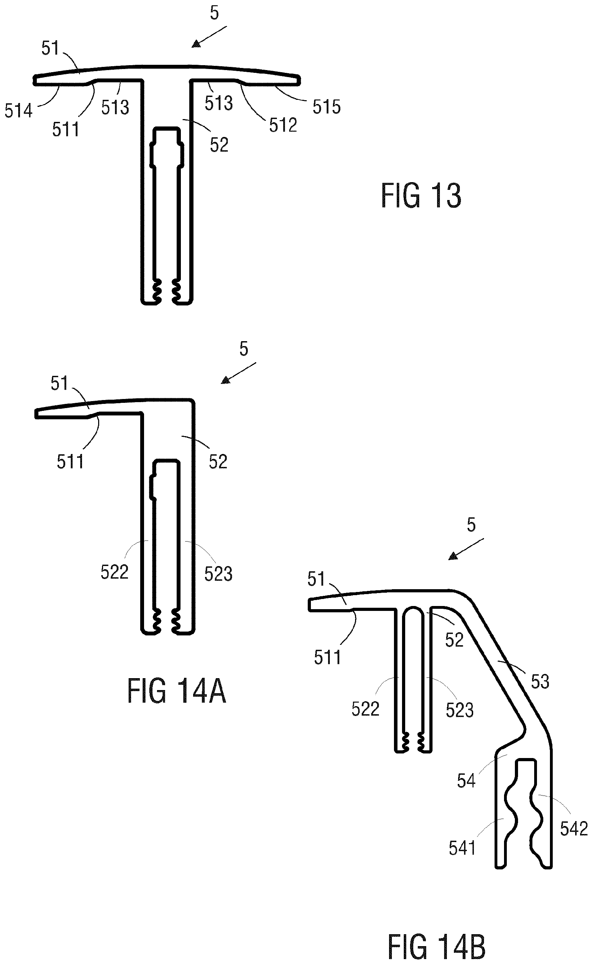

Die Figur 13 zeigt eine Klemme 5, bei welcher die Unterseite des horizontalen Schenkels 51 eine andere Kontur aufweist als es bei der Klemme gemäß den Figuren 1 bis 11 der Fall ist. Wie insbesondere aus den Figuren 10 und 13 ersichtlich ist, sind bei beiden Klemmen an der Unterseite des horizontalen Schenkels 51 zwei Stufen 511, 512 ausgebildet. Von diesen Stufen befindet sich die eine Stufe 511 diesseits des vertikalen Schenkels 52, und die andere Stufe 512 gegenüberliegend jenseits des vertikalen Schenkels 52. Beide Stufen 511, 512 erstrecken sich in Längsrichtung der Klemme 5 über deren gesamte Länge. Sie sind symmetrisch in Bezug zum vertikalen Schenkel angeordnet. Durch die Stufen 511, 512 wird die Unterseite des horizontalen Schenkels 51 in unterschiedliche Niveaus aufweisende Bereiche unterteilt, nämlich einen nicht so weit nach unten ragenden Zentralbereich 513, und zwei weiter nach unten ragende Außenbereiche 514, 515, die diesseits und jenseits des Zentralbereichs 513 auf den gegenüberliegenden Seiten desselben an diesen angrenzen. Wie aus einer Gegenüberstellung der Figuren 10 und 13 ersichtlich ist, befinden sich bei der Klemme 5 gemäß Figur 13 die Stufen 511, 512 näher am vertikalen Schenkel 52, wodurch die Außenbereiche 514, 515 größer werden als es bei der Klemme 5 gemäß Figur 10 der Fall ist. Die Stufen 511, 512 liegen im betrachteten Beispiel etwa in der Mitte zwischen dem vertikalen Schenkel 52 und den von diesen abgewandten seitlichen Enden des horizontalen Schenkels 51. Die weiter nach unten ragenden Außenbereiche 514, 515 sind diejenigen Klemmenabschnitte, die bei bestimmungsgemäßer Montage auf dem Rahmen 21 der Photovoltaikmodule 2 zu liegen kommen und diesen nach unten gegen die Profilschiene 3 drücken. Durch die Vergrößerung der Außenbereiche 514, 515 kommt die Klemme 5 großflächiger mit dem Rahmen 21 in Kontakt, und hält das Photovoltaikmodul fester in seiner aktuellen Position.

In der Figur 14A ist eine gegenüber der Klemme gemäß Figur 13 modifizierte Klemme 5 gezeigt. Diese Klemme hat nur auf einer Seite des vertikalen Schenkels 52, genauer gesagt auf der dem Photovoltaikmodul 2 zuzuwendenden Seite des vertikalen Schenkels 52 einen horizontalen Schenkel 51. Der Querschnitt hat also nicht mehr die Form eines T, sondern die Form eines auf dem Kopf stehenden L. Diese Klemme 5 eignet sich insbesondere als eine Randklemme, die am oberen oder unteren Rand des Photovoltaikmodul-Feldes zum Einsatz kommen kann, beispielsweise als Ersatz für die Klemmen 5 in den in den Figuren 2 und 4 gezeigten Anordnungen. Aufgrund des nur auf einer Seite vorgesehenen (halben) horizontalen Schenkels 51 können durch diese Klemme 5 nur ein einziges Photovoltaikmodul 2 (siehe Figur 4) oder zwei nebeneinander liegende Photovoltaikmodule (siehe Figur 2) befestigt werden, was aber für den Einsatz am Rand des Photovoltaikmodul-Feldes ausreichend ist.

Die Figur 14B zeigt eine alternative Ausführungsform der in der Figur 14A gezeigten Randklemme. Diese alternative Klemme 5 weist wie die in der Figur 14A gezeigte Klemme einen vertikalen Schenkel 52 und einen (halben) horizontalen Schenkel 51 auf, die wie die betreffenden Schenkel der in der Figur 14A gezeigten Klemme 5 angeordnet und ausgebildet sind. Zusätzlich weist die in der Figur 14B gezeigte Klemme 5 jedoch noch einen dritten Schenkel 53 auf. Dieser dritte Schenkel ist auf der vom horizontalen Schenkel 51 abgewandten Seite des vertikalen Schenkels 52 vorgesehen. Im betrachteten Beispiel hat der dritte Schenkel 53 einen vom horizontalen Schenkel 51 abgehenden horizontalen Abschnitt, einen sich daran anschließenden, schräg nach unten verlaufenden Mittelabschnitt, und einen sich daran anschließenden vertikalen Endabschnitt 54. Der vertikale Endabschnitt ist so angeordnet und so ausgebildet, dass er einhergehend mit dem Aufstecken des vertikalen Schenkels 52 auf den Verbindungssteg 32 der Profilschiene 3 mit dem kein Photovoltaikmodul 2 tragenden Auflagesteg 33, 34 der Profilschiene 3 in Verbindung kommt. Im betrachteten Beispiel ist der vertikale Endabschnitt 54 des dritten Schenkels 54 ähnlich wie der vertikale Schenkel 52 gabelförmig ausgebildet. Genauer gesagt wird der vertikale Endabschnitt 54 im Wesentlichen durch zwei Klemmschenkel 541, 542 gebildet, zwischen welchen ein zur Aufnahme eines der Auflagestege 33, 34 ausgelegter Zwischenraum vorhanden ist. Beim Aufstecken der Klemme 5 auf die Profischiene 3 kommt, wie auch bei den anderen hier vorgestellten Klemmen 5, der Verbindungssteg 32 der Profilschiene 3 zwischen den Rastschenkeln 522, 523 der Klemme 5 zu liegen. Einhergehend damit kommt einer der Auflagestege 33, 34 der Profilschiene zwischen den Klemmschenkeln 541, 542 der Klemme 5 zu liegen. Im betrachteten Beispiel werden dabei die Klemmschenkel 541, 542 mit dem dazwischen liegenden Auflagesteg durch eine Klemmverbindung miteinander verbunden. Bei entsprechender Anpassung von Klemme 5 und Profilschiene 3 könnte aber auch eine andere Verbindung vorgesehen werden, beispielsweise eine Rastverbindung, oder - allgemeiner ausgedrückt - eine federnde Verzahnung, oder eine beliebige sonstige Verbindung. Unabhängig von der Art der Verbindung ist Klemme 5 gemäß Figur 14B somit an zwei Stellen mit der Profilschiene 3 verbunden. Dadurch ergibt sich insgesamt eine festere und stärker belastbare Verbindung zwischen Klemme 5 und Profilschiene 3. Die Klemme 5 kann sich nämlich auch dann, wenn große Kräfte auf sie wirken, nicht relativ zur Profilschiene 3 bewegen. Auch Verformungen von Klemme 5 und/oder Profilschiene 3 sind dadurch verhinderbar. Der Vollständigkeit halber sei angemerkt, dass der dritte Schenkel 53 hierzu nicht zwangsläufig den in der Figur 14B gezeigten Aufbau aufweisen muss. Wichtig ist vor allem, dass die Klemme 5 über den dritten Schenkel 53 an einer zweiten Stelle mit der Profilschiene 3 verbunden ist.

Es dürfte einleuchten und bedarf keiner näheren Erläuterung, dass auch die in den Figuren 13 und 14 gezeigten Klemmen 5 unterschiedliche Längen, Höhen, und/oder sonstige Abmessungen aufweisen können, beispielsweise wie in den Figuren 12A bis 12D veranschaulicht modifiziert werden können. Grundsätzlich ist es also auch hier so, dass die Abmessungen der Klemme 5 insgesamt, aber auch die Abmessungen einzelner Klemmenabschnitte unabhängig voneinander beliebig verändert werden können.

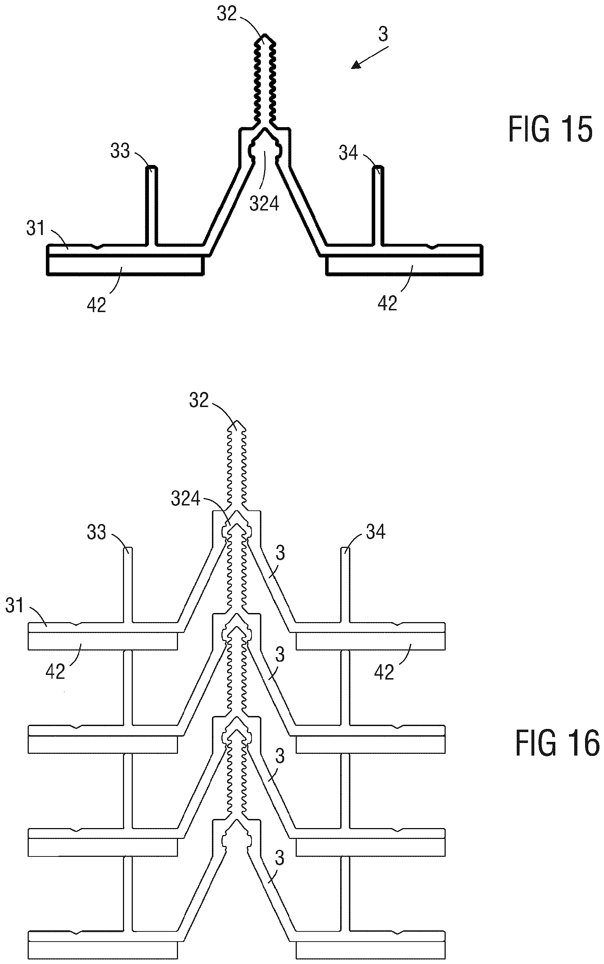

Die Figur 15 zeigt eine modifizierte Profilschiene 3. Diese unterscheidet sich von der in den Figuren 1 bis 11 gezeigten und unter Bezugnahme darauf beschriebenen Profilschiene 3 dadurch, dass die gabelförmige Verzweigung des Verbindungssteges 32 weiter oben beginnt. Genauer gesagt verzweigt sich der Verbindungssteg 32 schon dort, wo sich bei der Profilschiene 3 gemäß den Figuren 1 bis 11 (siehe insbesondere Figur 11) der Quersteg 323 befindet. Der Schraubkanal 324 befindet sich nach wie vor unmittelbar unter der Verzweigungsstelle, wandert aber zusammen mit der Verzweigungsstelle nach oben und kommt damit knapp unterhalb der Stelle zu liegen, an welcher sich bei der Profilschiene 3 gemäß Figur 11 der Quersteg 323 befindet. Die Profilschiene 3 gemäß Figur 15 weist keinen dedizierten Quersteg 323 mehr auf. Die Funktion des Quersteges, nämlich dessen Wirkung als seitlicher Anschlag für die Photovoltaikmodule 2 wird durch den den Schraubkanal 324 umgebenden Profilschienen-Abschnitt übernommen. Dieser Profilschienen-Abschnitt ist dort, wo die Photovoltaikmodule 2 an diesen anschlagen, also in dem oberhalb des Auflagesteges 34 liegenden Bereich als eine vertikale Fläche ausgebildet. Sowohl der Quersteg 323 bei der Profilschiene 3 gemäß Figur 11 als auch der den Schraubkanal 324 umgebende Profilschienen-Abschnitt der Profilschiene 3 gemäß Figur 15 stellen als seitlich Anschläge für die Photovoltaikelemente 2 dienende seitliche Vorsprünge des Verbindungssteges 32 dar. Es dürfte einleuchten und bedarf keiner näheren Erläuterung, dass diese seitlichen Vorsprünge auch auf beliebige andere Art und Weise realisiert werden können.

Vorzugsweise befindet sich der Schraubkanal 234 so weit oben, dass der vertikale Abstand zwischen der Unterseite der Basis 31, besser noch zwischen der Unterseite des auf deren Unterseite angebrachten EPDM-Streifens 42 oder dergleichen und der höchsten Stelle des Schraubkanals 324 größer ist als der vertikale Abstand zwischen der höchsten Stelle der Auflagestege 33, 34 und der höchsten Stelle des Verbindungssteges 32. Dann lassen sich die Profilschienen 3 wie in der Figur 16 veranschaulicht stapeln. Dabei kommt die Basis 31 einer jeweiligen Profilschiene 3 bzw. der an deren Unterseite angebrachte EPDM-Streifen 42 oder dergleichen auf den Auflagestegen 33, 34 der jeweils darunter liegenden Profilschiene 3 zu liegen. Und der Verbindungssteg 32 ragt von unten in den Schraubkanal 324 der jeweils darüber liegenden Profilschiene 3 hinein, ohne oben an diesen anzustoßen. Die Profilschienen 3 sind somit durch einfaches vertikales Aufeinandersetzen platzsparend und kippsicher stapelbar.

Die Profilschiene 3 gemäß Figur 15 ist aufgrund des Wegfalls des dedizierten Quersteges 323 einfacher und kostengünstiger herstellbar. Außerdem sind solche Profilschienen 3 wie erwähnt sehr einfach und effizient stapelbar.

Im betrachteten Beispiel sind sämtliche Komponenten des Montagesystems, also sowohl die Profilschiene 3, als auch die Klemme 5, als auch der Abschlussdeckel 7 aus Aluminium hergestellt. Sie könnten aber auch aus anderen Materialien hergestellt werden.

Alle beschriebenen Profilschienen 3 und Klemmen 5 können aufgrund der Tatsache, dass sie über ihre gesamte Länge einen sich nicht verändernden Querschnitt aufweisen, im Stranggussverfahren oder im Strangpresseverfahren hergestellt werden. Dies macht deren Herstellung besonders einfach und kostengünstig. Um sie auf die gewünschte Länge zu bringen, können sie einfach irgendwo abgeschnitten werden. Die Schnitte können an beliebigen Stellen erfolgen. Ebenso kann eine längere Profilschiene aus beliebig langen Einzelteilen zusammengesetzt werden.

Die vorstehend beschriebene Möglichkeit zur Montage von Photovoltaikmodulen auf einem Dach erweist sich unabhängig von den Einzelheiten der praktischen Realisierung als vorteilhaft. Die Komponenten des Montagesystems lassen sich besonders schnell, einfach und kostengünstig herstellen und sind ohne individuelle Anpassung für Photovoltaikmodule mit beliebigen Längen, Breiten und Höhen verwendbar. Die Montage selbst ist ebenfalls besonders einfach, schnell und fehlerunanfällig durchführbar. Und die Photovoltaikmodule werden hierbei auch noch schonend und dauerhaft sicher am Dach angebracht.

### Bezugszeichenliste

- 1: Dach
- 2: Photovoltaikmodul
- 3: Profilschiene
- 5: Klemme
- 7: Abschlussdeckel

- 11: Obergurt / Hochsicke
- 12: Untergurt / Tiefsicke

- 21: Rahmen von 2

- 31: Basis von 3
- 32: Verbindungssteg
- 33: Auflagesteg
- 34: Auflagesteg

- 41: Schraube zum Anschrauben von 3 an 11
- 42: EPDM-Streifen

- 51: horizontaler Schenkel von 5
- 52: vertikaler Schenkel
- 53: dritter Schenkel
- 54: Verbindungsabschnitt von 53

- 71: Schraube zum Anschrauben von 7 an 324

- 321: Nut / Rastvertiefung in 32
- 322: Rasterhebung an 32
- 323: Quersteg / Seitenanschlagssteg an 32
- 324: Schraubkanal in 32

- 511: Stufe an der Unterseite von 51
- 512: Stufe an der Unterseite von 51
- 513: Zentralbereich der Unterseite von 51
- 514: weiter als 513 nach unten ragender Außenbereich der Unterseite von 51
- 515: weiter als 513 nach unten ragender Außenbereich der Unterseite von 51

- 521: vertikaler Schlitz in 52
- 522: erster Rastschenkel
- 523: zweiter Rastschenkel
- 524: Rastvertiefungen an 522 und 523
- 525: Rasterhebungen an 522 und 523

- 541: Klemmschenkel
- 542: Klemmschenkel

- Rx: Photovoltaikmodul-Reihe

## Patentansprüche

1. Profilschiene für die Montage von Photovoltaikmodulen (2) auf einem Dach (1), wobei die Profilschiene (3) dazu ausgelegt ist, auf dem Dach angebracht zu werden, und wobei die Profilschiene eine Auflagefläche (33, 34) zum Auflegen von mindestens einem Photovoltaikmodul aufweist, **dadurch gekennzeichnet, dass** die Profilschiene einen vertikalen Verbindungssteg (32) aufweist, der mit einer das Photovoltaikmodul nach unten zur Auflagefläche drückenden Klemme (5) in Eingriff bringbar ist.

2. Profilschiene nach Anspruch 1, **dadurch gekennzeichnet, dass** der Verbindungssteg (32) senkrecht von einer plattenförmigen Basis (31) der Profilschiene (3) nach oben abgeht, wobei die Basis (31) der auf dem Dach (1) zu liegen kommende Bestandteil der Profilschiene (3) ist.

3. Profilschiene nach einem der vorhergehenden Ansprüche, **dadurch gekennzeichnet, dass** der Verbindungssteg (32) die Auflagefläche (33, 34) nach oben überragt.

4. Profilschiene nach einem der vorhergehenden Ansprüche, **dadurch gekennzeichnet, dass** der Verbindungssteg (32) zum Aufstecken der Klemme (5) auf den Verbindungssteg und Halten der Klemme im bestimmungsgemäß aufgesteckten Zustand am Verbindungssteg ausgelegt ist.

5. Profilschiene nach einem der vorhergehenden Ansprüche, **dadurch gekennzeichnet, dass** der Verbindungssteg (32) so ausgebildet ist, dass er durch eine federnde Verzahnung mit der Klemme (5) in Eingriff bringbar ist.

6. Profilschiene nach einem der vorhergehenden Ansprüche, **dadurch gekennzeichnet, dass** vom Verbindungssteg (32) seitlich Vorsprünge (323) abgehen, die einen seitlichen Anschlag für die auf der Auflagefläche aufliegenden Photovoltaikmodule bilden.

7. Profilschiene nach einem der vorhergehenden Ansprüche, **dadurch gekennzeichnet, dass** die Auflagefläche (33, 34) durch parallel zum Verbindungssteg (32) verlaufende vertikale Auflagestege gebildet werden.

8. Profilschiene nach einem der vorhergehenden Ansprüche, **dadurch gekennzeichnet, dass** die Profilschiene (3) einen in Längsrichtung der Profilschiene verlaufenden und sich über die gesamte Länge der Profilschiene erstreckenden Schraubkanal (324) aufweist, in welchen eine selbstfurchende Schraube (71) eindrehbar ist, sodass am vorderen und hinteren Ende der Profilschiene etwas an diese anschraubbar ist.

9. Profilschiene für die Montage von Photovoltaikmodulen (2) auf einem Dach (1), wobei die Profilschiene (3) dazu ausgelegt ist, auf dem Dach angebracht zu werden, und wobei die Profilschiene eine Auflagefläche (33, 34) zum Auflegen von mindestens einem Photovoltaikmodul aufweist, **dadurch gekennzeichnet, dass** die Auflagefläche durch die Oberseite eines oberen Endes mindestens eines vertikalen Auflagesteges (33, 34) gebildet wird.

10. Profilschiene nach Anspruch 9, **dadurch gekennzeichnet, dass** die Auflagefläche linienförmig ist.

11. Profilschiene für die Montage von Photovoltaikmodulen (2) auf einem Dach (1), wobei die Profilschiene (3) dazu ausgelegt ist, auf dem Dach angebracht zu werden, und wobei die Profilschiene eine Auflagefläche (33, 34) zum Auflegen von mindestens einem Photovoltaikmodul aufweist, **dadurch gekennzeichnet, dass** die Profilschiene (3) einen in Längsrichtung der Profilschiene verlaufenden und sich über die gesamte Länge der Profilschiene erstreckenden Schraubkanal (324) aufweist, in welchen eine selbstfurchende Schraube (71) eindrehbar ist, sodass am vorderen und hinteren Ende der Profilschiene etwas an diese anschraubbar ist.

12. Profilschiene nach Anspruch 11, **dadurch gekennzeichnet, dass** die Profilschiene zum Anschrauben eines als seitlicher Anschlag für die angrenzenden Photovoltaikmodule (2) wirkenden Abschlussdeckels (7) ausgelegt ist.

13. Zum Aufstecken auf die Profilschiene (3) gemäß einem der Ansprüche 1 bis 18 ausgelegte Klemme (5), **dadurch gekennzeichnet, dass** die Klemme (5)
- eine horizontale Platte (31) aufweist, welche im bestimmungsgemäß an der Profilschiene angebrachten Zustand auf einem oder mehreren Photovoltaikmodulen zu liegen kommt und diese nach unten zur Auflagefläche (33, 34) drückt, und
- einen von der Platte nach unten ragenden geschlitzten vertikalen Schenkel (52) aufweist, der so ausgebildet ist, dass im bestimmungsgemäß auf den vertikalen Schenkel (32) der Profilschiene (3) aufgesteckten Zustand der Klemme der vertikale Schenkel der Profilschiene im Schlitz (521) des vertikalen Schenkels der Klemme zu liegen kommt.

14. Montagesystem für die Montage von Photovoltaikmodulen auf einem Dach, **dadurch gekennzeichnet, dass** das Montagesystem (3, 5, 7) eine Profilschiene (3) gemäß einem der Ansprüche 1 bis 18 und eine Klemme (5) gemäß Anspruch 19 umfasst.

15. Montagesystem nach Anspruch 14, **dadurch gekennzeichnet, dass** das Montagesystem (3, 5, 7) zusätzlich einen an der Profilschiene (3) anbringbaren Abschlussdeckel (7) umfasst, der als seitlicher Anschlag für auf der Profilschiene aufliegende Photovoltaikmodule (2) wirkt und somit ein seitliches Verschieben der Photovoltaikmodule (2) in Längsrichtung der Profilschiene verhindert.
